# EUROPEAN PATENT APPLICATION

(11) **EP 4 808 156 A1**
(43) Date of publication of application: **16.09.2026**
(21) Application number: 25163397.0
(22) Date of filing: 13.03.2025
(51) Int. Cl.: H04R 25/00

(54) **NEURAL NETWORK, FITTING SYSTEM AND METHOD FOR USER-SPECIFICALLY ADJUSTING AUDIO SIGNAL PROCESSING ON A HEARING DEVICE**

(71) Applicant: Sonova AG, 8712 Stäfa (CH)
(72) Inventor: Rau, Richard, 8006 Zürich (CH); Kühnel, Volker, 8708 Männedorf (CH)
(74) Representative: Rau, Schneck & Hübner Patentanwälte Rechtsanwälte PartGmbB

(57) **Abstract**

A neural network, fitting system and method for user-specifically adjusting audio signal processing on a hearing device is described. The neural network (24) comprises a set of at least two data inputs (26) for receiving respective input data (ID), an encoder (27) for calculating a unified embedding (28) of the input data (ID) in a unified embedding space, and at least one decoder (29) for obtaining audiological output data (OD) from the unified embedding (28). The encoder (27) is configured to calculate the unified embedding (28) based on input data (ID) received by different subsets of the set of data inputs (26).

## Description

The disclosed technology generally relates to user-specifically adjusting audio signal processing on a hearing device, in particular a hearing device fitting, using a neural network. More specifically, the disclosed technology relates to a neural network for user-specifically adjusting audio signal processing on a hearing device, in particular for hearing device fitting. The disclosed technology further relates to a fitting system and a method for user-specifically adjusting the audio signal processing on a hearing device using a neural network. Further disclosed are a method for training a neural network for user-specifically adjusting audio signal processing and a hearing device for audio signal processing, wherein the audio signal processing is user-specifically adjusted using a neural network.

Audio signal processing on a hearing device has to be adjusted to the respective user, in particular to his or her personal needs, e.g. based on the respective hearing impairment. Audio signal processing may be adjusted by hearing device fitting, in particular by a hearing care professional. A successful user-specific or individual adjustment, in particular fitting, requires accurate models describing various aspects such as acoustic coupling, ear anatomy specifics, hearing loss, etc. An inappropriate modeling of acoustic couplings results in a poor match to a desired target gain and can cause poorer speech understanding, loudness discomfort and degradation of perceived sound quality.

EP 1 830 602 B1 describes a method for obtaining settings of a hearing instrument based on an obtained acoustic coupling quantity. Relevant acoustic coupling quantities are described in EP 1 830 602 B1, in particular with respect to Fig. 1, which is incorporated herein by reference. The acoustic coupling quantity and a corresponding model is used to determine a real-ear-to-coupler-difference (RECD), which can be used in hearing device fitting by setting respective gain matrices. EP 1 8130 602 B1 further foresees to use a plurality of different input data, such as feedback threshold, anthropometric data and the like, to improve the prediction of RECD. In practice, such complicated models, using a plurality of input data have proven to be unreliable and complicated in usage in many instances. For example, they require a large amount of input data, which has to be measured and/or provided for using the model. Often, not all of these different kinds of data are available during hearing device fitting. Moreover, requiring a plurality of data sets increases the risks of incorrect determination of individual data, e.g. by measurement errors, impairing the quality of the final result. In particular, incorrect measurements may lead to outliers in the data, resulting in insufficient or incorrect fitting.

It is an object of the disclosed technology to overcome the disadvantages of the prior art, in particular to provide for a precise and reliable, yet flexible, adjusting of audio signal processing on a hearing device.

This object is achieved by a neural network for user-specifically adjusting audio signal processing on a hearing device, in particular for hearing device fitting, according to claim 1. This object is also achieved by a fitting system according to claim 7 and a method for user-specifically adjusting the audio signal processing on a hearing device, in particular for hearing device fitting, according to claim 11.

The neural network for user-specifically adjusting audio signal processing on a hearing device comprises a set of at least two data inputs for receiving respective input data, an encoder for calculating a unified embedding of the input data in a unified embedding space, and at least one decoder for obtaining audiological output data from the unified embedding. The encoder is configured to calculate the unified embedding based on input data received by different subsets of the set of data inputs.

It has been realized that by using an encoder-decoder architecture of the neural network, wherein a unified embedding is calculated for a plurality of data inputs, allows for reliable and flexible determination of the audiological output data, even if only a subset of the set of data inputs are provided with data. This allows for a precise and flexible handling of different types of input data and their interdependencies. A high-quality prediction of audiological output data is possible even if input data for only some of the data inputs is available, e.g. can be measured reliably. Moreover, adverse effects of outliers can be mitigated.

The encoder is configured to calculate the unified embedding based on input data received by different subsets of the set of data inputs. This is, in particular, to be understood in that the encoder is configured to use the input data of one or more of the data inputs of the set of data inputs to calculate the unified embedding. The encoder may disregard input data from data inputs and/or may not use data inputs, to which no input data has been provided (e.g. because it is not available). A subset of the set of data inputs may in particular include the complete sets, combinations of one or more data inputs and/or individual data inputs of the set of data inputs. For example, the encoder may be configured to calculate the unified embedding based on input data received by any subset of the set of data inputs except the empty set (i.e. no data input at all). It is also possible that the encoder is configured to operate on a selection of the set of data inputs, e.g. two or more of these subsets.

User-specific adjustment of the audio signal processing on a hearing device comprises, but is not limited to, adjusting the audio signal processing to the user's needs and/or preferences and/or instant hearing situation. For example, user-specific adjustment may be a hearing device fitting, in particular by a hearing care professional. User-specific adjustment, in particular hearing device fitting, can be performed during setting up the hearing device for the respective hearing device user. User-specified adjustment can also be performed during runtime of the hearing device, in particular for adjusting the audio signal processing based on the instant hearing situation and/or the instant preferences of the hearing device user (enhancement of attenuation of specific sounds, voices or the like, removal of currently occurring reverberation or echo, balancing effects of the current wearing position, such as alterations of insertion of the earpiece, etc.).

A neural network in the sense of the disclosed technology is an artificial neural network, in particular a deep neural network, for example a fully connected neural network and/or a convolutional neural network. Depending on the type and format of input data, also other types and architectures of neural networks may be considered and/or combined with the aforementioned neural networks, such as large language models, transformer based neural networks, recurrent neural networks and the like. For example, the input data received by one or more of the data inputs may be preprocessed before being passed to the encoder, e.g. by a large language model to identify semantic content of received speech signals (e.g. allowing the hearing device user to give voice commands with regard to his or her preferences). It is also possible to provide image data to one or more of the data inputs, which may be preprocessed by a correspondingly adapted neural network block before being passed to the encoder. Preprocessing of the input data may also be performed externally of the neural network by preprocessing routines, which may comprise machine learning methods, such as neural networks, and/or may be based on classical computing algorithms.

The neural network may comprise one or more decoders for obtaining one or more audiological output data. Preferably, the neural network is configured to obtain a plurality of audiological output data, in particular different kinds of audiological output data. For example, a plurality of different audiological output data may be obtained by a single decoder or multiple decoders. Preferably, the neural network comprises one encoder per kind of audiological output data to be obtained. This allows for a particularly flexible execution of the neural network. For example, one or more of the decoders can be selectively chosen to calculate the required audiological output data. For example, only a subset of the decoders may be activated for obtaining the audiological output data required for the respective use case.

The neural network may comprise a network output for outputting a neural network output. Preferably, the network output may be the one or more outputs of the one or more decoders for outputting the one or more obtained audiological output data. In other embodiments, the neural network may comprise further processing blocks arranged subsequently to the decoder for further processing the obtained audiological output data. For example, the audiological output data may be post-processed, weighted and/or rated.

A hearing device in the context of the disclosed technology may in particular include hearing aids, headphones, earphones, assistive listening devices, or any combination thereof. The hearing device may include both prescription devices and non-prescription devices configured to be worn on or near a human head. As an example of a hearing device, a hearing aid is a device that provides amplification, attenuation and/or frequency modification of audio signals to compensate for hearing deficiency, hearing difficulty or hearing loss. Some examples of hearing aids include behind-the-ear (BTE) hearing aids, receiver-in-the-canal (RIC) hearing aids, in-the-ear (ITE) hearing aids, completely-in-the-canal (CIC) hearing aids, invisible-in-the-canal (IIC) hearing aids and/or cochlea implants, which may include a device part and an implant part. Particularly preferable, the hearing device of the disclosed technology is a hearing aid, a hearable and/or a hearing implant.

The hearing device may be part of a hearing device system including one or more hearing devices, in particular hearing aids. In particular, the hearing device system may comprise two hearing devices, in particular hearing aids, associated with the left and right ear of the hearing device user, respectively. The hearing device system may further comprise one or more peripheral devices, such as a mobile compute device, a smartphone, a smartwatch and/or a wireless microphone. Different devices of the hearing device system may be connectable or connected with each other in data transmitting manner, in particular via wireless data connection. Hearing device systems comprising two hearing devices, in particular two hearing aids, may preferably be adapted for binaural audio signal processing.

Audio signal processing on the hearing device may comprise executing of one or more programs of the hearing device. A program is in particular a specific kind of audio signal processing routine or mode by the hearing device. For example, the hearing device may comprise different programs for obtaining a different kind of audio signal processing, in particular depending on the instant hearing situation, the preferences of the hearing device user and/or the input audio signal (i.e. the sound to be processed). For example, different programs may relate to different hearing situations of the hearing device user, e.g. depending on the amount of noise, number of speakers, type and number of further sound sources and/or the activity of the hearing device user. For example, a different program may be used, when the hearing device user is in a calm surrounding chatting with another person, than, when the conversation takes place in a crowded surrounding with a lot of background noise (such as at the train station or in a restaurant). Further, different programs may be used when the hearing device user is moving, e.g. in traffic, or is doing sports.

Input data to be received by the data inputs may be any data, which is audiologically relevant for the user-specific adjustment, in particular personalization, of the audio signal processing. The input data may comprise, but is not limited to the following examples:
- Demographic information regarding the hearing device user, in particular including one or more of age, gender, height, weight and experience in wearing hearing devices.
- One or more properties of the hearing device, in particular including the type of hearing device (ITE, BTE, CIC, ...) and/or physical coupling characteristics of the hearing device. Such coupling characteristics may include one or more of the type of earpiece (dome, custom shell, earmold, ...), venting characteristics (such as openness of a dome or diameter, length and/or shape of vent and/or acoustic vent mass and/or vent cutoff frequency), receiver type and/or tubing.

- One or more measured acoustic characteristics, including, but not being limited to, real-ear measurement (REM) data, e.g. using a probe tube. The measured acoustic characteristics may include one or more of the following:
   -- one or more acoustic coupling transfer functions, in particular real-ear unaided gain (REUG), ear-to-coupler level difference (ECLD), real-ear-to-coupler-difference (RECD), real-ear occluded gain (REOG), real-ear insertion gain (REIG), real-ear aided gain (REAG), and/or microphone location effect (MLE);
   -- acoustic feedback characteristics, in particular feedback threshold measurement data and/or feedback path;
   -- audiograms, in particular audiogram headphone measurements, audiogram hearing device measurements and/or audiogram differences; and
   -- ear-canal-microphone measurement data and/or tympanometry measurement data.
- Ear anatomy data, in particular regarding the anatomy of the ear and/or ear canal, e.g. including impressions and/or image and/or video data of the ear and/or ear canal.
- User-specific configuration data, in particular usage time of the hearing device in specific programs, volume and/or equalizer adaptions, e.g. in a hearing device control app, sound cleaner (such as beamformer, denoiser, wind noise canceller, feedback canceller, etc) adaptions and/or history of past fittings and/or measurement data.
- Hearing capability data of the hearing device user, such as hearing impairment characteristics. Hearing capability data, in particular hearing impairment characteristics, may, for example, include audiograms, (such as audiogram headphone measurements, audiogram hearing device measurements and/or audiogram differences), progression of hearing loss, data from speech understanding tests and/or spectro-temporal modulation tests.
- Information on the current hearing situation of the hearing device user, including real-time measurements, currently activated programs and/or user input. Real-time measurements may include measurements of leakage of an earpiece (e.g. via ear canal microphone measurements or via correlation-based measurements of the feedback path). Real-time measurements may additionally or alternatively concern measurements of environmental sound characteristics, such as background noise levels, speech levels and/or speech types. User input may, for example, be provided via a, preferably predefined, interface and/or processed, in particular processed by a large language model, text and/or speech.

Different data inputs may be associated with different types of input data, in particular different of the above groups of input data and/or different examples of one or more of the groups. For example, different data inputs may be associated with different measured acoustic characteristics, such as acoustic coupling transfer functions. The union of different types of input data of the set of data inputs defines a set of input data types. A network input to be processed by the neural network might comprise a subset of the set of input data types.

Measurement data may refer to raw measurement data, in particular frequency dependent or frequency band dependent raw measurement data, or any kind of processed measurement data. For example, feedback measurement data may refer to raw data obtained from feedback measurements or processed measurement data, such as the determined, in particular frequency dependent, feedback threshold. In many instances, raw measurement data is particularly useful for retrieving relevant information. For example, a frequency band specific signal-to-noise ratio of the measured feedback threshold during measurement can be used for estimating data quality in the respective frequency band (e.g. low signal-to-noise ratio in a specific frequency band may indicate less precise measurement data).

The at least one decoder may be configured to obtain two or more different types of audiological output data from the unified embedding.

Audiological output data may be any data, which may be used in hearing device adjustment, in particular hearing device fitting. The output data may comprise in particular one or more of the following:
- Predicted acoustic characteristics, including acoustic coupling transfer functions, preferably ECLD, RECD, REUG and/or REOG, MLE and/or acoustic feedback characteristics, such as feedback threshold and/or feedback path.
- Hearing device steering parameters, being parameters, which are directly used for adjusting the audio signal processing on a hearing device. Such steering parameters may, e.g. be transferred to the hearing device and be applied in audio signal processing, thereby steering the audio signal processing, e.g. by a signal processing unit of the hearing device. The hearing device steering parameters may include one or more of the following:
   -- Amplification characteristics, including, but not limited to target gain settings, such as gain matrices, for example hearing-loss compensation gain/input matrices. The target gain settings may, preferably, be frequency dependent and/or relate to one or more of different programs of the hearing device.
   -- Adaption of amplification characteristics, for example gain corrections, such as gain offsets. Amplification characteristics and/or adaption thereof may be global (i.e. for all programs of the hearing device) or program-specific.
   -- Sound cleaner settings, including beam former settings, noise reduction settings, wind noise cancellation strength and/or feedback cancellation strength. Sound cleaner settings may, preferably, be program-specific.
   -- Frequency compression characteristics.
   -- One or more thresholds for activating one or more programs of the hearing device, for example for switching from one program to another.
   -- Attack and release times of amplification, in particular in dependence of input level, frequency and/or program.
   -- Selection of one or more programs to be activated.

One or more predicted acoustic characteristics as part of the audiological output data may concern the same type of acoustic characteristics as that, which are to be provided as input data, in particular in form of measured acoustic characteristics. The predicted acoustic characteristics may be refined with respect to measured acoustic characteristics, e.g. by correcting measurement errors, and/or mitigating the effect of outliers. Predicted acoustic characteristics may be used, in particular, in hearing device fitting, for example by a hearing care professional. Predicted acoustic characteristics may be used to select suitable steering parameters, such as gain matrices, e.g. as described in EP 1 830 602 B1.

Hearing device steering parameters may be directly transmitted to and applied in the hearing device. Obtaining hearing device steering parameters by the neural network, in particular by its decoder, has the advantage, that no intermediate determination of the steering parameters, e.g. based on measured and/or predicted acoustic characteristics, is needed. This allows for an, in particular fully automatic, adjustment of the audio signal processing. For example, the adjustment may be performed online, i.e. during runtime of the hearing device. Such automatic adjustment may also be used for setting up the hearing device, in particular in case of non-prescription devices, such as over-the-counter hearing devices. Automatic adjustment may also be used as a starting point for further fitting by the hearing care professional.

The disclosed technology is not limited to specific combinations of input data and audiological output data. In particular, it is possible to use different combinations of input data and audiological output data. Suitable combinations of input data and audiological output data can be chosen depending on the respective use case (e.g. providing predicted/refined acoustic characteristics for hearing device fitting by a hearing care professional, (semi-)automatic setting up of a hearing device, fine-tuning of the audio signal processing during runtime, and the like). For example, information on the current hearing situation may not be required for hearing device fitting, in particular in the context of setting up the hearing device. On the other hand, information on the current hearing situation may get relevant for fine-tuning of the hearing device during runtime.

According to a preferred aspect of the disclosed technology, the input data of the set of data inputs comprise one or more of the following data:
- demographic information on the hearing device user, in particular the age of the hearing device user,
- one or more properties of the hearing device, being the type of hearing device and/or physical coupling characteristics of the hearing device,
- one or more acoustic coupling transfer functions, including in particular ear-to-coupler level difference (ECLD), real-ear occluded gain (REOG), and/or microphone location effect (MLE),
- hearing impair characteristics of the hearing device user, in particular one or more audiograms,
- feedback threshold measurement data, and
- information on current hearing situation of the hearing device user.

These input data have been proven to be particularly relevant. The one or more acoustic coupling transfer functions and/or the one or more hearing impairment characteristics, in particular the one or more audiograms, may in particular be obtained by measurements conducted by a hearing care professional.

According to a preferred aspect of the disclosed technology, the audiological output data comprises one or more of the following:
- one or more acoustic coupling transfer functions, in particular ear-to-coupler level difference (ECLD), and
- amplification characteristics, in particular dependent on frequency and/or on the audio signal to be processed.

Predicted acoustic coupling transfer functions, in particular ear-to-coupler level difference (ECLD), have proven to be particularly relevant for determining steering parameters for the hearing device, in particular amplification characteristics, such as (preferably frequency dependent) gain settings to reach desired target gains.

ECLD describes the transfer function from a 2cc coupler to real ear using the actual hearing device and earpiece. For adjusting audio signal processing, in particular for hearing device fitting, ECLD is of particular high relevance. Another particularly suitable, but less relevant than ECLD, acoustic coupling transfer function is real-ear-to-coupler-difference (RECD). It is measured for the real ear, but using a foam tip instead of the actual hearing device and earpiece.

Obtaining amplification characteristics as part of the audiological output data is particularly suitable for using the output of the neural network directly for steering the hearing device.

In some situations, it may be preferable, but not strictly required, to divide the data inputs into groups of data inputs. A first group of data inputs may contain one or more data inputs for input data, which has to be a necessarily input to the neural network for computing unified embedding. A second group of data inputs may comprise one or more data inputs for input data, which is optional for calculating the unified embedding. The necessity of the input data of the first group of data inputs is not technical strictly required, but may improve the reliability and quality of the obtained audiological output data. For example, the first group of data inputs may be associated with input data, which is particularly relevant for the respective use case and/or can be easily obtained, in particular with no or low measurement errors. Such input data may, for example, refer to the age of the hearing device user, his or her hearing impairment characteristics, such as an audiogram, and/or characteristics of the hearing device, in particular the type of hearing device and coupling condition. The second group of data inputs may be associated with optional input data, which improves the output, but may be not readily available or subject to possible measurement errors.

Providing a first group of data inputs may, in particular, simplify the training of the neural network. In particular, the encoder does not need to be configured and trained to calculate the unified embedding based on input data received by any subset of the first group of data inputs.

According to a preferred aspect of the disclosed technology, the at least two data inputs are configured for receiving availability information on whether the respective input data is available and/or is to be considered in the calculation of the unified embedding. Availability information may steer the further processing by the neural network, in particular by the encoder. For example, if some input data is missing or is of bad quality, it may not be input into the neural network. This may be indicated by respective availability information. This way, the neural network, in particular its encoder, does not have to consider the respective data input. This may simplify the calculation by the neural network and safe computing resources.

Further, the availability information may be used to exclude specific input data on purpose, for example for finding correlations between different pairs of input data. This may, for example, be used as a quality check, by selectively excluding part input data and comparing the obtained audiological output data. If one or more input data are subject to errors, for example due to measurement errors, the respective audiological output data will change, when the respective input data is considered.

The availability information may, preferably, be provided by a Boolean index. For example, if the Boolean index reads "1", the respective input data is available and shall be considered in calculating the unified embedding. If the Boolean index reads "0", this indicates that the input data is not available or should not be considered in calculating the unified embedding.

According to a preferred aspect of the disclosed technology, the encoder comprises a data encoder block per data input for obtaining a data embedding for the respective input data in a respective data embedding space, and a merging block for calculating the unified embedding from the data embeddings. This allows for a functional separation of calculating an embedding for each of the input data and merging of the data embeddings into the unified embedding. In particular, the individual data encoder blocks can be configured for the respective input data in order to improve the respective data embedding, in particular to ensure a particularly meaningful data embedding for the respective input data, for example having a maximized information content.

Moreover, individual data encoder blocks for each data input are particularly advantageous if only a subset of the set of data inputs is used for calculating the unified embedding. The data encoder blocks, which are associated with data inputs, which do not receive input data or whose input data is not to be considered in the calculation of the unified embedding, do not have to be executed, reducing computational effort, computing time and power consumption.

A further particularly advantageous aspect of the individual data encoder blocks for each data input is that the neural network can be efficiently and precisely set up, in particular trained. For example, it is possible to predefine or pretrain the individual data encoder blocks, e.g. based on separate training on respective training data, leading to a decreased complexity in training. Moreover, training of the individual data encoder blocks can take into account specifics of the respective kind of input data, resulting in a particular meaningful data embedding. The training of the data encoder blocks may, for example, use autoencoders, in particular variational autoencoders.

Advantageously, training of the merging block can be focused on the combination of different subsets of input data. For example, the merging block may be configured to calculate the unified embedding based on input data received by any subset of the at least two data inputs except for the empty set.

Preferably, each data embedding may include an availability coordinate or index, in particular in form of a Boolean variable, which indicates, whether the respective input data is present and/or whether the respective input data is to be considered in calculating the unified embedding. For example, the availability coordinate or index may be set in accordance with availability information received by the respective data input. If the availability information, e.g. a respective Boolean index, indicates that no input data is present, the respective data encoder block has not to be executed, but the respective availability coordinate or index of the data embedding may be set in accordance with the availability information.

According to a preferred aspect of the disclosed technology, the encoder, in particular a merging block thereof, is configured to determine a trust score for the input data of at least one of the data inputs. Preferably, the encoder, in particular the merging block thereof, is configured to calculate a trust score for all input data being based on measurements, in particular comprising measured acoustic characteristics. Preferably, the neural network is configured to output the one or more trust scores being determined by the encoder, in particular by the merging block thereof.

A trust score in the sense of the disclosed technology is, in particular, an estimate of the accuracy and/or reliability of the respective input data, in particular of the quality of measurement data contained in the respective input data, e.g. with regard to noisy or faulty measurements or inputs.

The value of the trust score may reflect the degree of plausibility of the input data compared with other input data received by one or more of the other data inputs. The determination of the degree of plausibility may, in particular, be learned by the neural network, when comparing the preliminary outputs that it learned were okay in an overall context with all the inputs provided. If an odd value is input, the neural network applies the lessons learned in that it excludes misfitting input data in the resulting unified embedding and lowers the trust score for the respective input data that might be deviating from the expected value, e.g. by being outside of the range of input data that is considered to be normal in the context of the other input data.

For example, different input data (such as different acoustic characteristics, hearing capability data of the hearing device user, ear anatomy data) may be intercorrelated with each other. Advantageously, the encoder, in particular a merging block thereof if utilized, can implicitly take into account the intercorrelations of different input data. Being configured to calculate the unified embedding based on input data received by different subsets of the set of data inputs, the encoder, in particular a merging block thereof, can determine a plausibility of the respective input data, for example, if the input data is not in line with predictions based on the other input data received by other data inputs and/or if the respective input data deviates from an expected norm. Thus, it is possible to detect outliers, in particular based on implicitly taking into account intercorrelations of the respective input data. For example, measurement errors and/or faulty inputs can be detected. Based on a determination of the plausibility, the encoder, in particular a merging block thereof, can determine the trust score.

Particularly preferable, the trust score can be used to determine the further usage of the respective input data in the adjustment process, in particular in the hearing device fitting. For example, input data having a low trust score may not be considered in the further process and/or replaced by other kinds of input data and/or by a predicted or refined respective kind of input data obtained by the at least one decoder.

It is, for example, also possible that input data, which is based on measurements and receives the low trust score, can be replaced by other input data, for example by remeasuring the respective quantities, in particular the respective acoustic characteristic.

As mentioned above, it is possible that the at least one decoder obtains a predicted acoustic characteristic. If, for example, the encoder determines a high trust score for the respective measured acoustic characteristic, the prediction of the predicted acoustic characteristic may be obsolete. For example, the neural network may be trained not to obtain the predicted acoustic characteristic, if the measured acoustic characteristic has a high trust score, reducing the calculation effort, calculation time and energy consumption.

The disclosed technology may, in particular, relate to a computer program product, e.g. for a hearing device system and/or a fitting system therefore. The computer program product may comprise instructions, which, when the computer program is executed on a computer, e.g. on a device of a hearing device system or a remote computer, to which the hearing device system is connectable, such as a fitting system, cause the computer to execute the neural network described above. The neural network for adjusting the audio signal processing on a hearing device may be a computer program product. It may be stored and/or provided on any computer-readable medium.

The fitting system for user-specifically adjusting audio signal processing on a hearing device, in particular for a hearing device fitting, may preferably comprise the neural network. It is also possible that the fitting system has access to the neural network, for example via a data connection, in particular via a wireless data connection, e.g. an internet connection. For example, the neural network may be stored and executed on a remote device, for example on a server, to which one or more fitting systems, in particular fitting systems located at different locations, have access to.

The fitting system may comprise or have access to one neural network for user-specifically adjusting audio signal processing. It may also comprise or have access to a plurality of such neural networks. For example, different neural networks may be configured for specific adjustment, in particular fitting, tasks and/or for specific combinations of input data and audiological output data.

The fitting system may be part of a hearing device system. It may, for example, be realized as part of a peripheral device of a hearing device system, for example, in form of a software or app being stored and executable on a peripheral device, such as a mobile phone. The software of app may contain the neural network and/or may be configured to establish a data connection to a remote device storing and executing the neural network. It is also possible that the fitting system is part of the hearing device to be adjusted. A fitting system being part of the hearing device system is particularly suitable for adjusting the audio signal processing during runtime of the hearing device, for example for fine-tuning the audio signal processing.

The fitting system may be external of the hearing device system. For example, the fitting system may be a computing device, in particular of a hearing care professional. For example, the fitting system may be a dedicated computing device for executing the hearing device fitting. It is also possible that the fitting system is realized by a software and/or app being installable, storable and/or executable on a computing device, in particular on a computing device of the hearing care professional, for example a desktop computer, a mobile computer, a mobile phone, a tablet and the like.

A fitting system external to the hearing device system may be connectable to the hearing device system, in particular to a hearing device to be adjusted, in a data transmitting matter, in particular by a wireless data connection. This way, hearing device steering parameters may be transmitted from the fitting system to the hearing device to steer and/or adjust the audio signal processing on the hearing device. It is also possible that data from the hearing device is transmitted to the fitting system, for example measurement data, in particular relating to audiogram hearing device measurements, measurements of leakage of the hearing device and the like. Also other data, which might be relevant for the adjustment of the hearing device may be transmitted from the hearing device to the fitting system, such as currently activated programs, preferred programs of a hearing device user and the like.

The fitting system may, preferably, comprise a data interface for sending data to a hearing device system, in particular a hearing device thereof, and/or to receive data therefrom.

According to a preferred aspect of the disclosed technology, the fitting system is configured to determine steering parameters for user-specifically adjusting audio signal processing on the hearing device based on one or more audiological output data obtained via the neural network. Preferably, the fitting system comprises a data interface for transmitting the determined steering parameters to the hearing device. The fitting system may, in particular, be configured to process audiological output data, in particular acoustic characteristics, obtained by the neural network in order to determine steering parameters to be transmitted to the hearing device. The determined steering parameters may, for example, be one or more of the hearing device steering parameters discussed above, such as amplification characteristics, adaption thereof, sound cleaner settings and the like.

Determination of the steering parameters may be fully automatic by the fitting system or semi-automatic, allowing intervention of a fitting system operator, for example a hearing care professional. For example, the fitting system may determine a proposal for the steering parameter, which may be reviewed and/or adapted by a fitting system operator, in particular a hearing care professional.

According to a preferred aspect of the disclosed technology, determining the steering parameters comprises weighting at least one of the obtained audiological output data in dependence of one or more trust scores determined by the neural network. This way, the quality of the input data can be considered when determining the steering parameters. In particular, it is possible to combine predicted audiological output data with respective input data based on the trust score. This way, the data used for determining the steering parameter is optimized. The audio signal processing adjustment, in particular the hearing device fitting, is particularly reliable.

The weighting of the at least one obtained audiological output data may be implemented in the neural network processing, i.e. in the neural network, or in other parts of the fitting system, for example in post-processing routines for post-processing an output of the neural network.

According to a preferred aspect of the disclosed technology, the input data of the neural network comprises a measured acoustic characteristic, the audiological output data comprises a corresponding predicted acoustic characteristic, and the fitting system is configured to determine a proposed acoustic characteristic, wherein the proposed acoustic characteristic is determined from the measured acoustic characteristic and the predicted acoustic characteristic in dependence of a respective trust score obtained by the neural network. For example, the neural network can receive a measured acoustic characteristic, in particular an ear-to-coupler level difference (ECLD), as input data and obtain, by the at least one decoder, a corresponding predicted acoustic characteristic, in particular a predicted ECLD. The encoder of the neural network, in particular a merging block thereof, may determine a trust score for the measured acoustic characteristic, for example as described above. The fitting system may, based on the trust score, determine whether the measured acoustic characteristic or the predicted acoustic characteristic is used as the proposed acoustic characteristic.

Advantageously, the fitting system is configured to determine a proposal for the acoustic characteristic, the proposed acoustic characteristic, based on the measured acoustic characteristic and/or the corresponding predicted acoustic characteristic. This allows for a particularly precise and reliable proposal for the acoustic characteristic to be used in the adjustment, in particular the hearing device fitting, for example for determining a steering parameter, in particular by the fitting system. It is also possible that the proposed acoustic characteristic is output to be used by a fitting system operator, for example by a hearing care professional, to conduct further audio signal processing adjustment.

Preferably, the fitting system may calculate a mixture of the measured acoustic characteristic and the proposed acoustic characteristic, wherein a mixing ratio is determined by the trust score. In particular, the contribution of the predicted acoustic characteristic can be determined by weighting the predicted acoustic characteristic as described above. This way, the quality of the measurement and/or prediction can be particularly reliably considered. In particular, the risk of measurement errors or calculation artifacts in the proposed acoustic characteristic is reduced.

Determination of the proposed acoustic characteristic may be conducted by the fitting system based on the measured acoustic characteristic and a predicted acoustic characteristic outputted by the neural network, in particular in dependence of a trust score outputted by the neural network. In other words, determination of the proposed acoustic characteristic may be performed downstream of the neural network. It is also possible that the determination of the proposed acoustic characteristic is implemented within the neural network. In other words, the determination of the proposed acoustic characteristic is part of the neural network processing. For example, training the neural network may include end-to-end learning with regard to the proposed acoustic characteristic.

The disclosed technology also relates to a training method for training a neural network for user-specifically adjusting audio signal processing on a hearing device, in particular for hearing device fitting. The training method may, in particular, be used to train the neural network described above.

The training method in particular comprises the steps:
- providing a neural network, the neural network having
   -- a set of at least two data inputs for receiving respective input data,
   -- an encoder for calculating a unified embedding of the input data of the at least two data inputs in a unified embedding space, and
   -- at least one decoder or obtaining audiological output data from the unified embedding
- providing a plurality of training data sets, each training data set comprising
   -- one or more training data samples, and
   -- at least one audiological target data sample,
   wherein the one or more training data samples of different training data sets are associated with input data of different subsets of the set of data inputs, and
- applying supervised training to the neural network using a plurality of training data sets by providing training data samples to the associated data inputs of the neural network and comparing the audiological output data, obtained via the at least one decoder, with the at least one audiological target data sample.

Providing training data sets, comprising training data samples that are associated with input data of different subsets of the set of data inputs, enables the neural network to learn to deal with input data, which is received by a corresponding subset of the set of data inputs. The neural network, in particular, learns to process incomplete input data. The neural network, preferably, implicitly learns to replace and/or mask incomplete, in particular missing, input data, preferably using implicitly learned interdependencies of input data of different data inputs.

In particular, one or more of the training data sets, preferably all training data sets, comprise one audiological target data sample per audiological output data to be obtained by the at least one decoder. Particularly preferable, the neural network comprises two or more decoders and the training data samples comprise one audiological target data sample per decoder, wherein each decoder is configured to obtain one kind of audiological output data.

Preferably, at least one of the one or more training data samples of at least some training data sets comprises noise and/or erroneous data, in particular at least one of the one or more training data samples is randomly replaced with a noisy data sample. Providing noisy and/or erroneous data as training data samples trains the neural network in dealing with low input data quality, e.g. due to measurement errors and/or input errors. The training and functioning of the neural network are particularly robust.

Erroneous data may, for example, be input data obtained by faulty measurements. Further, erroneous data may be the wrong kind of input data, which is provided to the respective data input, for example if a different kind of measured acoustic characteristic is provided to the data input for a specific kind of measured acoustic characteristic. Noisy data sample may, for example, be due to bad measurement quality, e.g. having a low signal-to-noise ratio.

In defining the training data samples, it is, for example, possible to replace one kind of input data with a different, non-matching kind of input data to obtain an erroneous input data. It is also possible to use some kind of measurement data and combine it with noise, such as white noise. It is also possible to by taking a data sample, in particular having a high signal-to-noise ratio, and add or multiply the data sample or an input value derived therefrom by a random number during training.

Preferably, the neural network, in particular the encoder thereof, is configured to determine a trust score for the input data of at least one of the data inputs, and the training data sets comprise a target trust score to be compared with the determined trust score. Preferably, the neural network, in particular the encoder thereof, is configured to determine a trust score for all input data, which is based on measurement data and, thus, subject to possible measurement errors, and the training data sets comprise a target trust score for each of these input data. This way, the neural network can only be trained to deal with noisy and incomplete input data, but also to evaluate the input data, thereby preferably allowing a better evaluation of the input data and/or to further process the obtained audiological output data in dependence of the at least one trust score.

Preferably, the encoder of the neural network comprises a data encoder block per data input for obtaining a data embedding for the respective input data in a respective data embedding space and a merging block for calculating the unified embedding from the data embeddings, wherein the encoder blocks are pretrained based on respect of training data samples and target data samples. This reduces the complexity of the training of the neural network.

Preferably, the training data sets may comprise data obtained from simulations and/or data obtained from real-ear measurements in laboratories and/or by hearing care professionals, in particular collected from end users. Preferably, the training data sets comprise training data samples containing data obtained from real-ear measurements. This way, a reliable training reflecting the intended use case can be ensured.

A method for user-specifically adjusting the audio signal processing on a hearing device, in particular for hearing device fitting, using the neural network described above comprises the steps:
- providing hearing device, the audio signal processing of which is to be user-specifically adjusted,
- providing input data samples, which relate to the provided hearing device, the hearing device user and/or the instant hearing situation of the hearing device user, to respective one or more data inputs of the neural network,
- obtaining audiological output data using the neural network, and
- adjusting the audio signal processing of the hearing device based on the obtained audiological output data.

The method may involve using one or more neural networks for user-specifically adjusting audio signal processing. For example, different neural networks may be configured for specific adjustment, in particular fitting, tasks and/or for specific combinations of input data and audiological output data.

The input data samples may comprise data belonging to one or more of the input data described above. For example, input data samples may be provided to a subset of the set of data inputs, depending on the availability of the input data samples for the respective hearing device user. For example, the neural network may have a plurality of data inputs for different kinds of measured acoustic characteristics. For the respective hearing device user of the hearing device, some of the measurements may be available, some not. In this case, only the data inputs, which relate to available measured acoustic properties, may be provided with the respective input data.

The input data samples may be obtained for the respective adjustment process or may be retrieved from a storage, e.g. because they have been obtained previously in another adjustment process. For example, a hearing care professionals may obtain the input data samples based on measurements and/or user information and/or information on the respective hearing device and/or user data retrieved from the respective hearing device (such as preferences, current settings and the like).

Adjusting the audio signal processing may comprise obtaining settings for the hearing device. Adjusting the audio signal processing may, in particular, comprise adjusting existing settings of the hearing device, in particular to adapt the audio signal processing to one or more of the following: the needs of the hearing device user, the current hearing situation, frequently encountered hearing situations and the like. The adjustment of the audio signal processing is based on the obtained audiological output data.

For example, the audiological output data may comprise one or more hearing device steering parameters, which may be directly used to adjust the audio signal processing of the hearing device. For example, the hearing device steering parameters may be transmitted to the hearing device and/or implemented thereon.

It is additionally or alternatively possible to post-process the audiological output data to obtain hearing device steering parameter for adjusting the audio signal processing. For example, the audiological output data may comprise one or more predicted acoustic characteristics, based on which steering parameters are determined. It is also possible that, based on audiological output data, in particular one or more predicted acoustic characteristics, a proposed acoustic characteristic is determined, in particular based on a trust score obtained by the neural network, which may then be used for determining steering parameters.

According to a preferred aspect of the disclosed technology, the audiological output data comprises at least one predicted acoustic characteristic, in particular at least one predicted acoustic coupling transfer function, preferably a prediction of the ear-to-coupler level difference (ECLD), which is used to determine steering parameters to be implemented on the hearing device. The steering parameters may, for example, be determined, in particular automatically, by a fitting system comprising the neural network or has access thereto. The steering parameters may also be determined by a hearing care professional based on the at least one predicted acoustic characteristic, for example based on a proposal by the fitting system. The steering parameters may be determined directly based on the at least one predicted acoustic characteristic. It is also possible that the predicted acoustic characteristic undergoes post-processing before being used to determine the steering parameters.

According to a preferred aspect of the disclosed technology, determining the steering parameters comprises weighting at least one of the obtained audiological output data in dependence of one or more trust scores determined by the neural network. This leads to a particularly reliable and precise determination of the steering parameters.

According to a preferred aspect of the disclosed technology, the input data of the neural network comprises a measured acoustic characteristic and the audiologic output data comprises a corresponding predicted acoustic characteristic, wherein a proposed acoustic characteristic is determined from the measured acoustic characteristic and the predicted acoustic characteristic in dependence of a respective trust score determined by the neural network for the measured acoustic characteristic, and wherein the adjustment of the audio signal processing is determined using the proposed acoustic characteristic. For example, the measured and predicted acoustic characteristic can be weighted and/or mixed in dependence of the trust score. The proposed acoustic characteristic is particularly reliable, in particular with regard to the measurement quality of the measured acoustic characteristic and/or possible artifacts of the predicted acoustic characteristic.

According to a preferred aspect of the disclosed technology, the audiological output data comprises steering parameters, which are implemented on the hearing device. The steering parameters may, for example, comprise any of the steering parameters discussed above. Steering parameters may be used as settings in the hearing device and/or to adapt of replace current settings of the hearing device.

Obtaining steering parameters as part of the audiological output data allows for a particularly easy adjustment of the audio signal processing. The adjustment can, for example, be applied upon setting up the hearing device. It is also possible to perform adjustment during the lifetime of the hearing device, in particular during runtime thereof. Adjustment may, for example, be performed automatically, in particular on a regular basis, and/or upon user initiation, in particular, if the hearing device user is not content with the current settings and/or audio signal processing. For example, automatic adjustment may be triggered when the placing of the hearing device in or at a hearing device user's ear is detected. At this instance, current acoustic characteristics, in particular current feedback threshold measurements and/or leakage measurements, can be used to adjust the audio signal processing to the instant wearing situation of the hearing device.

According to a preferred aspect of the disclosed technology, the input data comprises feedback information and/or information on the current hearing situation of the hearing device user measured during runtime of the hearing device and adjustment is performed in parallel to audio signal processing. This allows for a fine-tuning of the audio signal processing during runtime. In particular, a change in the hearing situation may be accounted for, for example, if the hearing device user changes from a quiet place to a crowded/busy location.

A disclosed technology also relates to a hearing device. The hearing device may comprise an audio input for obtaining an audio input signal, an audio processing unit for processing the audio input signal to obtain an audio output signal using one or more processing routines, and an audio output for outputting the audio output signal. The one or more processing routines may be user-specifically adjusted using the neural network and/or fitting system described above. For example, user-specific adjustment of the one or more processing routines may be performed by the method for user-specifically adjusting the audio signal processing or hearing device as described above.

In the sense of the disclosed technology, an audio signal, in particular the input audio signal and the output audio signal, may be any electrical signal, which carries acoustic information. For example, the input audio signal may be raw audio data, which is obtained by the audio input unit by receiving a respective ambient sound. The input audio signal may further comprise processed audio data, e.g. compressed audio data and/or a spectrum obtained from the ambient sound. The input audio signal may contain an omni signal and/or a beamformed audio signal.

An audio input unit may comprise one or more electroacoustic transducers, especially in the form of one or more microphones. The audio input unit may receive ambient sound and transform it into an input audio signal. It is also possible that the audio input unit may comprise, in addition to or instead of the one or more transducers, an interface that allows for receiving audio signals, e.g. in the form of an audio stream. For example, an audio stream may be provided to the audio input unit by an external microphone and/or by a peripheral device.

An exemplary audio input unit may further comprise (pre-)processing routines for processing received ambient sounds into an input audio signal. For example, the audio input unit may comprise a beamformer, in particular a binaural beamformer. The audio input unit may comprise pre-processing routines for applying transformations, such as a Fast Fourier Transformation (FFT) and/or a Discreet Cosine Transformation (DCT), window functions, and the like to received audio signals and/or received ambient sound.

The audio output unit may comprise an electroacoustic transducer, in particular in form of a receiver. The audio output unit may provide a corresponding output sound to the hearing device user via the receiver. Furthermore, the audio output unit can comprise, in addition to or instead of the receiver, an interface that allows for outputting electrical audio signals, e.g., in the form of an audio stream or in the form of an electrical signal, that can be used for driving an electrode of a hearing aid implant.

Further details, features and advantages of the disclosed technology are obtained from the description of exemplary embodiments with reference to the figures, in which:
- Fig. 1: shows the schematic depiction of an exemplary hearing device system comprising two hearing devices and being connectable to a remote device and a fitting environment,
- Fig. 2: shows a schematic depiction of an exemplary hearing device, which may be part of the hearing device system of Fig. 1,
- Fig. 3: shows a schematic depiction of an embodiment of a user-specifically adjusting audio signal processing on a hearing device using one or more neural networks,
- Fig. 4: shows a schematic depiction of a possible embodiment of an input side of a neural network for creating a user-specific embedding used to adjust the audio signal processing on a hearing device,
- Fig. 5: shows a schematic depiction of a possible embodiment of an output side of a neural network for user-specifically adjusting the audio signal processing on a hearing device,
- Fig. 6: shows a schematic depiction of a further embodiment of user-specifically adjusting audio signal processing on a hearing device using one or more neural networks, and
- Fig. 7: shows a schematic depiction of a further embodiment of user-specifically adjusting audio signal processing on a hearing device using one or more neural networks.

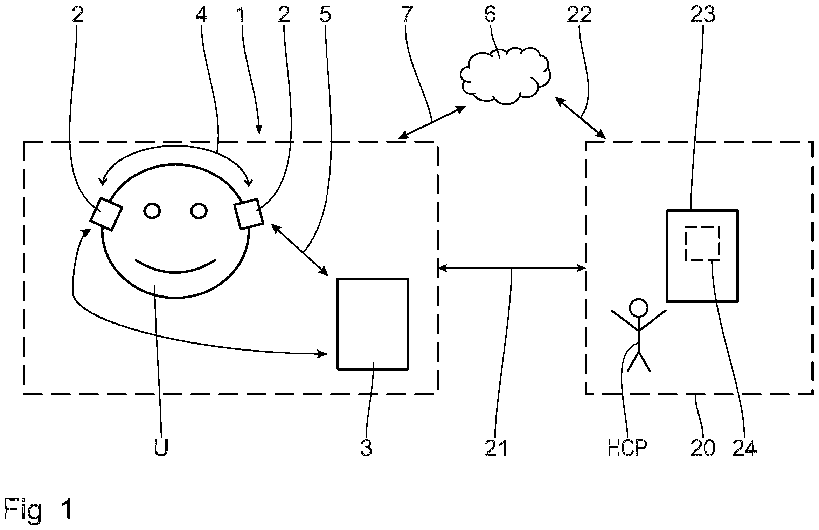

Fig. 1 schematically shows a hearing device system 1 associated with a hearing device user U. The hearing device system 1 comprises two hearing devices 2. The hearing devices 2 are wearable or implantable hearing aids, being associated with the left and right ear of the hearing device user U, respectively.

The hearing device system 1 further comprises a peripheral device 3 being a portable device, e.g. a smartphone, tablet, smartwatch and/or wireless microphone. In a preferred embodiment, the peripheral device provides a user interface for adjusting hearing device parameters in an intuitive and user-friendly way. For example, a hearing device software, e.g. in form of a mobile app, may be installed on the peripheral device to allow user interaction with the hearing device system 1 via the peripheral device 3.

In other embodiments, exemplary hearing device systems may comprise more or fewer devices. For example, a hearing device system may comprise a single hearing device. In some embodiments, the hearing device system 1 may not comprise a peripheral device, or it may comprise two or more peripheral devices.

The hearing device 2 are connected to each other in a data-transmitting manner via wireless data connection 4. The wireless data connection may also be referred to as wireless link and may, in particular, be used for binaural audio signal processing. The hearing devices 2 may be further connectable to a peripheral device 3 by wireless data connection 5. Any suitable protocol may be used for establishing the wireless data connections 4, 5. The wireless data connections 4, 5 may be based on the same or different protocols. Exemplary wireless data connections may be by Bluetooth, Bluetooth LE audio or similar protocols, such as, for example, Asha Bluetooth. Further exemplary wireless data connections are DM (digital modulation) transmitter, aptX LL and/or induction transmitters (NFMI). Also other wireless data connection technologies, for example, broadband cellular networks, in particular 5G broadband cellular networks, and /or local networks, in particular wireless local area networks (WLAN), can be used.

The hearing device system 1 may be connectable to a remote device 6 via remote data connection 7. The remote device 6 may be a remote server. Via remote device 6, a cloud service may be established. The remote data connection 7 may, preferably, be established via the internet, e.g. via WiFi and/or mobile data protocols, such as 3G, 4G and/or 5G broadband satellite and/or cellular networks. The remote data connection 7 may be established between the hearing devices 2 and the remote device 6. Additionally or alternatively, the remote data connection 7 may be established via the peripheral device 3, in particular via a smartphone.

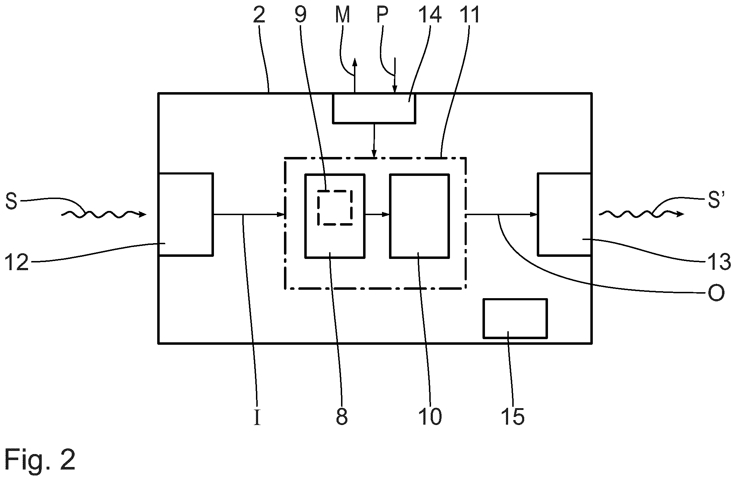

Fig. 2 schematically illustrates an exemplary hearing device 2 of the hearing device system 1 in more detail.

Hearing device 2 comprises a memory 8, on which hearing device software 9 is stored. Hearing device software 9 comprises instructions to be executed, when operating the hearing device 2. For example, hearing device software 9 may comprise one or more audio processing routines for processing audio signals. In particular, hearing device software 9 may comprise one or more programs for processing audio signals, in particular situation-specifically.

Hearing device 2 further comprises a processor 10, in particular for executing instructions in the hearing device software 9.

The hearing device 2 comprises an audio processing unit 11 for processing audio signals on the hearing device 2. The audio signal processing unit 11 may be seen as a functional unit, which may or may not be associated with specific hardware components. In an embodiment, the memory 8 with hearing device software 9 and the processor 10 may be part of the audio processing unit 11. For example, the audio processing unit 11 may comprise one or more chips, in particular a single chip, comprising the memory and the processor 10. It is also possible that different components may be combined to form the audio processing unit 11.

The hearing device 2 further comprises an audio input unit 12 to obtain an input audio signal "I". The input audio signal I is to be processed by the audio processing unit 11 to obtain an output audio signal "O". The hearing device 2 further comprises an audio output unit 13 for outputting the output audio signal O.

An audio signal, in particular the input audio signal I and the output audio signal O, may be any electrical signal which carries acoustic information. For example, the input audio signal I may be raw audio data, which is obtained by the audio input unit 12 by receiving ambient sound S. For example, the audio input unit comprises one or more electroacoustic transducers, especially in the form of one or more microphones. The audio input unit 12 receives the ambient sound S and provides a corresponding input audio signal I to the audio processing unit 11. The audio processing unit 11 performs audio signal processing on the respective input audio signal I, thereby obtaining the output audio signal O. The output audio signal O is provided to the output audio unit 13, which outputs the output audio signal O.

In the present embodiment, the output audio unit 13 comprises an electroacoustic transducer, in particular in form of a receiver. The audio output unit 13 provides the corresponding output sound S' to the hearing device user U via the receiver.

The hearing device 2 may further comprise a data interface 14 for receiving and/or sending data via the wireless data connections 4, 5. Data interface 14 may, in particular, be used for obtaining steering parameters P to be implemented on the hearing device, for example for providing steering parameters P to the audio processing unit 11 for steering the audio signal processing.

The data interface 14 can also be used to transmit measurement data M from the hearing device 2 to other devices, in particular to a fitting environment 20, e.g. to a fitting system 23 thereof. Possible measurement data M are for example measurements, which can be conducted using the hearing device 2, such as leakage measurements or audiograms measured with the hearing device2.

Hearing device 2 may further comprise a battery 15 for providing electrical power to the hearing device 2 and its components. Battery 15 can be a rechargeable battery and/or a non-rechargeable battery.

Processor 10 can be a general-purpose processor. Processor 10 can include special-purpose hardware, such as application-specific integrated circuits (ASICs), programmable logic devices (PLDs), field-programmable gated arrays (FPGAs), programmable circuitry (e.g. one or more microprocessor microcontrollers), digital signal processors (DSPs), appropriately programmed software and/or computer code, or a combination of special purpose hardware and programmable circuitry. Processor 10 may, additionally or alternatively, comprise hardware adapted for processing neural networks, e.g. an AI chip.

Any suitable data memory can be used for memory 8. Exemplary data memories include, but are not limited to, dynamic random access memories (DRAM), static random access memories (SRAM), random access memories (RAM), solid state drives (SSD), hard drives and/or flash drives.

The audio signal processing on the hearing device 2 can be user-specifically adjusted, for example during hearing device fitting. For example, steering parameters P may be obtained and transmitted to the hearing device 2 for adjusting the audio signal processing. In the following, exemplary ways for audio signal processing adjustment are described.

For example and as shown in Fig. 1, hearing device system 1 may be connectable to a fitting environment 20 via fitting data connection 21. Fitting environment 20 may also be connectable to the remote device 6, via a data connection 22. Fitting data connection 21 and data connection 22 may, in particular, be wireless data connections, in particular via the internet. They may be established by any suitable data connection protocols, in particular as exemplarily described with respect to the remote data connection 7.

In the embodiment of Fig. 1, the fitting environment 20 may be provided by a hearing care professional HCP. The fitting environment 20 comprises a fitting system 23 for user-specifically adjusting the audio signal processing on one or both of the hearing devices 2. The hearing care professional HCP may operate the fitting system 23.

In other embodiments, the fitting system may be part of the remote device 6, in particular of a remote server, and/or may be included in the hearing device system 1, in particular by way of a remote device 3.

Audio signal processing adjustment may, in particular, be performed upon setting up the hearing device, in particular during a hearing device fitting session.

The fitting system 23 comprises a neural network 24 for user-specifically adjusting the audio signal processing on a hearing device, in particular on one or both of the hearing devices 2 of the hearing device system 1. In the embodiment of Fig. 1, the neural network 24 is incorporated in the fitting system 23, e.g., by way of an executable software stored on the fitting system. In other embodiments, the neural network 24 may be external of the fitting system 23. The fitting system 23 may be connectable to the neural network 24 and have access to it. For example, the neural network 24 may be stored and executed on a remote device 6, in particular on a remote server, to which the fitting system 23 has access via the data connection 22.

In other embodiment, the fitting system, in particular the neural network, may be comprised by the hearing device system. This allows for a particularly flexible adjustment of the audio signal processing, in particular independent of an external fitting system, e.g. at runtime of the hearing device system. An interface to an outside system, in particular to the fitting system of Fig. 1, is not required. For example, the fitting system, in particular the neural network, may be comprised by a peripheral device of the hearing device system and/or by one or both hearing devices.

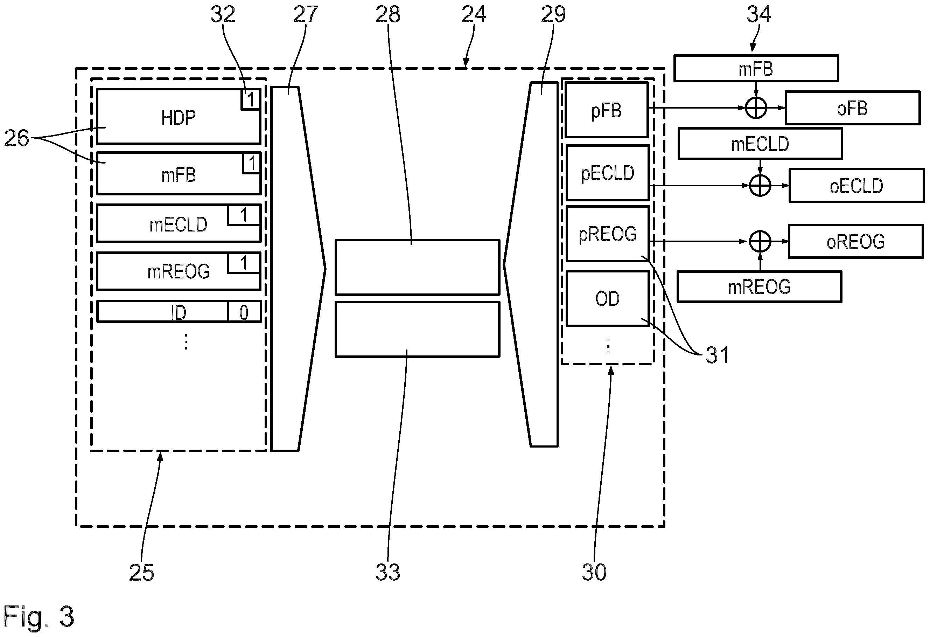

With regard to Fig. 3, a first example of audio signal processing adjustment using the neural network 24 is described. The neural network may be comprised and executable by the fitting system 24 of Fig. 1. It is also possible that the neural network 24 is comprised and executable by the hearing device system, in particular at least one hearing device thereof.

The neural network 24 comprises an input domain 25 with a plurality of data inputs 26, which form a set of data inputs, of which, purely exemplarily, five data inputs 26 are shown. Input data ID received by the data inputs 26 are fed to an encoder 27, which calculates a unified embedding 28 for input data ID received by one or more of the data inputs 26. The encoder 27 is configured to calculate the unified embedding 28 based on different subsets of input data ID received by the set of data inputs 26.

The neural network 24 comprises an output domain 30 with a plurality of network outputs 31 for outputting the audiological output data OD. At least some of the audiological output data may be post-processed by the fitting system 23, as will be described later.

The input data is generally referred to with the reference ID. The audiological output data is generally referred to with the reference OD. In an exemplary concrete kind of input or output data is (for illustration purposes only) referred to in the figures, respective unique reference signs are provided (such as mFB or pFB in Fig. 3 as will be discussed below).

The data inputs 26 are configured to receive an availability information in form of an availability index 32, given by a Boolean variable ("1" or "0") indicating whether the respective input data ID is present or should be considered in calculating the unified embedding.

The encoder 27 is further configured to calculate and, optionally, output a trust score 33 for at least some of the input data ID, in particular for input data ID being based on measurements. For example, the trust score may be given by a value between "0" and "1", defining the reliability of the respective input data ID.

Fig. 3 schematically illustrates a specific embodiment, which is particularly directed to the determination of acoustic characteristics, in particular acoustic coupling transfer functions, which may then be used in further hearing device fitting. For example, the neural network 24 of Fig. 3 may be incorporated in a fitting system 23 of an hearing care professional HCP.

In the embodiment of Fig. 3, the data inputs 26 may be configured for receiving one or more of the following input data ID:
- one or more properties of the hearing device HDP, e.g. the type of hearing device (BTE, ITE, ...) and/or physical properties thereof (type of earpiece, venting characteristics, ...),
- measured feedback characteristics mFB, such as feedback threshold,
- measured ear-to-coupler level difference mECLD, in particular obtained from RemiFit measurements, and
- measured real-ear occluded gain mREOG, in particular obtained from RemiFit measurements.

Other input data ID, may also be input via one or more further data inputs 26, as schematically indicated in Fig. 3.

As shown exemplarily in Fig. 3, the availability indexes 32 for HDP, mFB, mECLD and mREOG are set to 1, that for other data ID is set to 0 indicating the above-mentioned exemplary input data ID are provided, but no further input data ID. In other instances, other combinations of the data inputs 26 may receive the respective input data ID. Preferably, the encoder 27 is configured to determine the unified embedding 28 based on any subset of these input data.

Here and in the following, there is a distinction between measured, predicted and proposed acoustic characteristics, such as the ECLD, for example. When reference is made to measured acoustic characteristics, the respective abbreviation is started with "m". When reference is made to a predicted acoustic characteristic, the respective abbreviation is started as "p". When reference is made to a proposed acoustic characteristic, the respective abbreviation is started as "o".

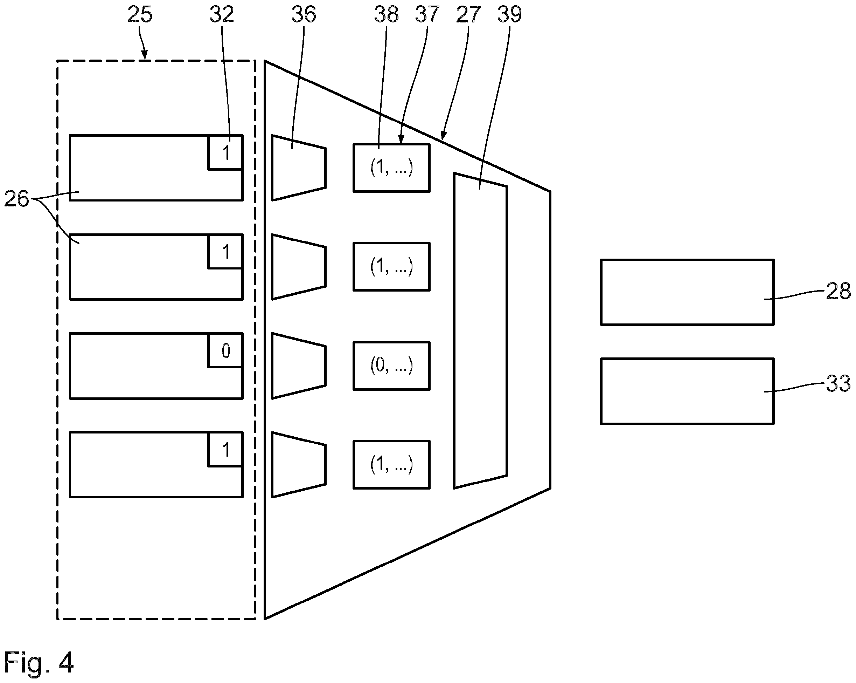

The encoder 27 calculates the unified embedding 28 and the trust score 33 (see Fig. 4 thereto). In the present example, the input data mFB, mECLD and mREOG are based on measurements, so that a respective trust score is determined. The properties of the hearing device HDP may not be based on measurements, but may be exact data (like the hearing device being a behind-the-ear (BTE) hearing aid), so that no trust score is needed or calculated. For example, the trust score may be output in form of a vector, wherein for each input data, in particular for each measured input data, one coordinate determines the respective trust score. Of course, no trust score is calculated for the input data, which is not provided (availability index "0"). In this case the trust score may be set to "0". Exemplary trust scores are given in table 1.

**Table 1 - Exemplary trust scores for the embodiment shown in Fig. 3**

| **Input** | **Trust score** |
|---|---|
| HDP | No trust score derived in the present example |
| mFB | 0.95 |
| mECLD | 0.5 |
| mREOG | 0.95 |
| ID (not provided/missing) | 0 |

As can be seen from Table 1, mFB and mREOG have a trust score close to one, indicating high reliability/quality of the measurements. For mECLD, a trust score of 0.5 is determined, indicating lower reliability/quality of the measurements, e.g. due to measurement errors or poor signal-to-noise ratio.

The audiological output data comprises a predicted feedback threshold pFB, a predicted ear-to-coupler level difference pECLD and a predicted real-ear occluded gain pREOG. Further audiological output data OD are possible.

Before being used for hearing device fitting, the audiological output data OD may be weighted in dependence of the respective trust score 37. In the embodiment shown in Fig. 3, a mixing unit 34 of the fitting system 23 combines the predicted acoustic characteristics with the measured acoustic characteristics to calculate a mixture, wherein the mixing ratio is set in dependence of the trust score 37. The result of this weighting/mixing is a proposed acoustic characteristic, in the present example a proposed feedback threshold oFB, a proposed ear-to-coupler level difference oECLD and a proposed real-ear occluded gain oREOG. The proposed acoustic characteristics are particularly robust against measurement errors in the measured acoustic characteristics and/or against calculation artifacts with regard to the predicted acoustic characteristics.

The proposed acoustic characteristics may then be used for determining steering parameters P for the hearing device, either manually by the hearing care professional HCP or (semi-)automatically by the fitting system 23. The determined steering parameters P can then be transmitted to the hearing device and implemented thereon.

The specific example shown in Fig. 3, in particular the shown combination of input data ID and output data OD is not to be understood in a limiting way. For the use case of hearing device fitting, it is particularly suitable to use one or more of the following input data:
- demographic information on the hearing device user, in particular age, body height and/or weight, preferably at least the age of the hearing device user,
- information on the type of hearing device (BTE, ITE, ...),
- one or more physical coupling characteristics of the hearing device (type of earpiece, venting characteristics, receiver type, tubing, ...),
- measured feedback threshold mFB or feedback test related measurement data,
- real-ear measurement data, in particular using a probe tube, such as mREUG, mECLD, mREOG, mMLE,
- one or more audiograms, in particular being indicative of the hearing impairment of the hearing device user, for example audiograms measured in situ or by headphones, preferably audiogram differences of headphone and in situ measurements, in particular measured with the hearing device in place and/or imported from other sources,
- ear canal microphone measurement data,
- image and/or video data of the ear,
- impressions of the ear and/or the ear canal anatomy, and
- tympanometry measurements.

Particularly suitable audiological output data are:
- ECLD,
- feedback threshold,
- REUG,
- REOG,
- MLE.

In particular ECLD is relevant as audiological output data for being used in hearing device fitting. The further acoustic characteristics may be optionally determined to improve and/or facilitate the hearing device fitting.

As shown in Fig. 3, the post-processing of the audiological output data, for example via the mixing unit 34, can be performed by a fitting system 23 based on an output of the neural network 24. It is also possible that the mixing unit or any other post-processing of the audiological output data is incorporated into the neural network itself. In particular, mixing unit 34 of Fig. 3 may be part of the neural network 24.

Fig. 4 shows a possible example for an input side of the neural network 24 in more detail. As can be seen in Fig. 4, the encoder 28 may comprise data encoder blocks 36 for each of the data inputs 26 to calculate a respective data embedding 37 of the input data received via that data input 26. The data embedding 37 are in a respective data embedding space. The data embedding spaces may differ depending on the respective input data ID.

A coordinate of the data embedding 37, for example the first coordinate, is an availability index 38, indicating the availability of the respective input data ID and/or whether the respective input data ID is to be considered in calculating unified embedding 28. As can be seen from Fig. 4 the availability index 38 matches the availability index 32 in the input domain 25. The availability index 38 may, for example, be a Boolean index.

The data encoder block 36 may be pre-trained for the respective input data ID, in particular to achieve a maximized information content in the respective data embedding space.

A merging block 39 is configured to calculate a unified embedding 28 as well as the trust scores 33 based on the data embeddings 37. In that regard, the merging block 39 may only take into account the data embedding 37, for which the availability index 38 is set to "1", i.e., where some data input 26 was available.

The structure of the encoder 27 shown in Fig. 4 may be advantageous, but it is not necessarily required. In other embodiments, the encoder 37 may be a single encoder trained on all possible input data ID and combinations of different subsets.

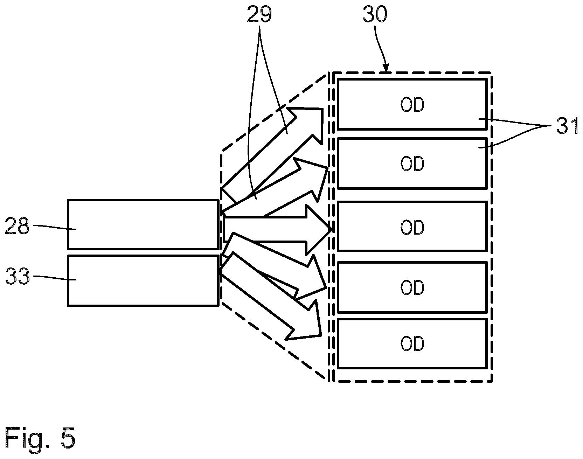

In Fig. 5, a possible output site of the neural network 24 is shown in more detail. There may be a plurality of decoders 28 for calculating respective audiological output data OD to be output via respective network outputs 31 in the output domain 30.

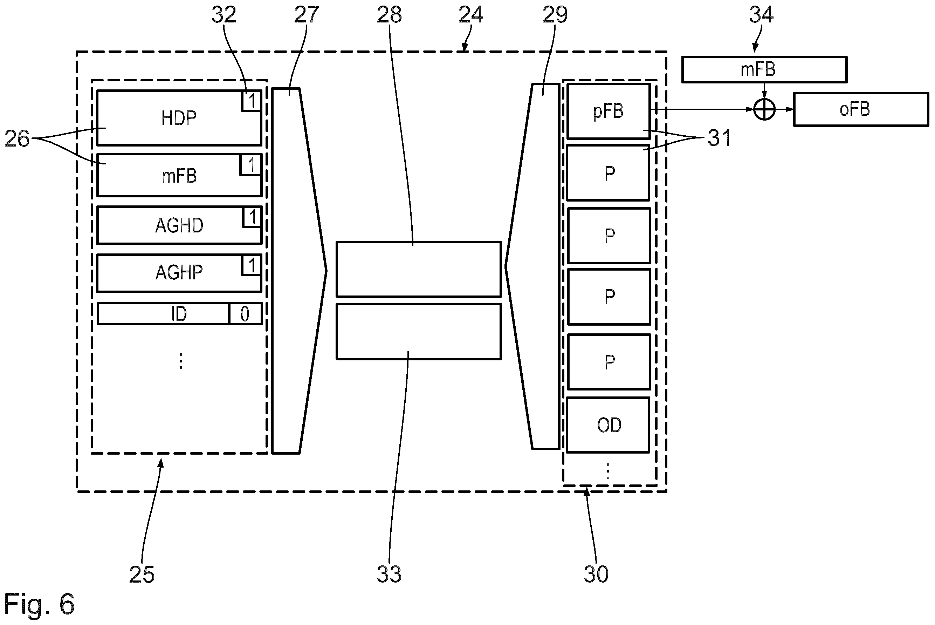

With regard to Fig. 6, a further exemplary embodiment for the audio signal processing adjustment on a hearing device is described. The example of Fig. 6 is particularly suitable for a direct adjustment of the hearing device processing, for example, in an initial fitting procedure.

Non-limiting, exemplary suitable input data ID shown in Fig. 6 comprise properties of the hearing device HDP, the measured feedback threshold mFB, an audiogram measured with the hearing device AGHD and an audiogram measured with headphones AGHP. Further and/or alternative input data ID is possible.

Non-limiting, exemplary suitable audiological output data comprise a predicted feedback threshold pFB as well as one or more steering parameters P. Further and/or alternative audiological output data OD is possible.

As shown in Fig. 6, predicted acoustic characteristics, exemplarily the predicted feedback threshold pFB may be weighted using a mixing unit 34 to obtain a proposed acoustic characteristic, here oFB.

The obtained steering parameters P may be any of the steering parameters described above. Exemplary steering parameters P may comprise amplification characteristics, in particular a gain matrix directed to hearing loss compensation, a frequency compression and/or noise reduction settings, in particular noise reduction settings for different programs of the hearing device 2.

Again, the input data ID as well as the audiological output data OD shown in Fig. 6 are only exemplary. Further combination of input data ID and audiological output data OD are possible.

Particularly relevant input data ID for the direct setting of hearing device steering parameters P, in particular for the initial fitting may comprise one or more of the following:
- demographic information on the hearing device user, in particular age, body height, weight and/or experience in wearing hearing devices, preferably at least the age of the hearing device user,
- information on the type of hearing device (BTE, ITE, ...),
- one or more physical coupling characteristics of the hearing device (type of earpiece, venting characteristics, receiver type, tubing, ...),
- measured feedback threshold mFB or feedback test related measurement data,
- real-ear measurement data, in particular using a probe tube, such as mREUG, mECLD, mREOG, mMLE,
- one or more audiograms, in particular being indicative of the hearing impairment of the hearing device user, for example audiograms measured in situ or by headphones, preferably audiogram differences of headphone and in situ measurements, in particular measured with the hearing device in place and/or imported from other sources,
- ear canal microphone measurement data,
- image and/or video data of the ear,
- impressions of the ear and/or the ear canal anatomy,
- tympanometry measurements,
- end-user data, such as usage time of hearing devices in specific programs (such as programs for speech and noise, calm surroundings (sound scenes), noisy surroundings (sound scenes), ...), volume/equalizer adaptions (for example in a hearing device app), sound cleaner adaptions (for example for the beamformer, feedback canceller, wind noise canceller, and denoiser),
- history of past fittings and/or measurement data for the respective hearing device user, and
- data from speech understanding tests and/or spectrum-temporal modulation tests.

Particularly relevant audiological output data for, in particular initial, fitting may comprise one or more of the following:
- ECLD
- feedback threshold
- REUG
- REOG,
- MLE,
- amplification characteristics, such as gain matrices, preferably depending on frequency and/or audio signal to be processed and/or hearing situation,
- adaptions to amplification characteristics, preferably program and/or hearing situation specific,
- sound cleaner settings (e.g. strength of the beamformer, denoiser, wind noise canceller, feedback canceller), preferably program and/or hearing situation specific,
- frequency compression, preferably program and/or hearing situation specific,
- attack and release times of amplification, preferably program and/or hearing situation specific.

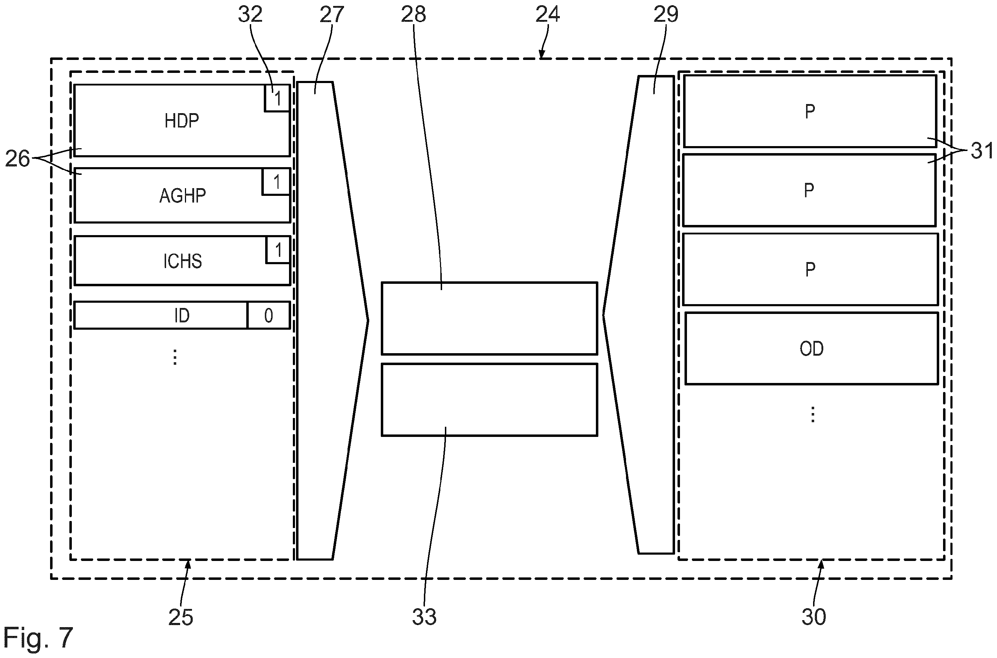

With regard to Fig. 7, a further exemplary embodiment for audio signal processing adjustment is described. The embodiment of Fig. 7 is particularly suitable for adjusting audio signal processing during runtime of the hearing device, e.g. for fine-tuning and/or fitting adaptations. For example, the neural network 24 may be comprised and executed by the hearing device system, in particular a peripheral device and/or at least one hearing device thereof. It is also possible that a fitting system comprised by the hearing device system, in particular a peripheral device and/or at least one hearing device thereof, may have access to the neural network 24, which may, e.g., be stored on a remote device, in particular a remote server. Non-limiting, exemplary suitable, input data ID shown in Fig. 7 are properties of the hearing device HDP, one or more audiograms, for example a headphone measured audiogram AGHP and information on the current hearing situation ICHS. The information on the current hearing situation may be any such information described above.

The audiological output data OD output by the network outputs 31 are steering parameters P, which may be directly transmitted and implemented on the hearing device. Any of the steering parameter P described above are possible. Particularly suitable steering parameters are, in particular gain matrices, preferably adapted for hearing loss compensation for the respective hearing device user, program-dependent gain offsets and/or thresholds of when a program is activated with respect to situational measurements (such as overall loudness of a hearing situation, amount of noise, amount of speech and signals and the like).

The input data ID and audiological output data OD shown in Fig. 7 are purely exemplary. Other or further input data ID and/or audiological output data OD are possible.

Particularly suitable input data ID for audio signal processing adjustment during runtime are one or more of the following:
- demographic information on the hearing device user, in particular age, body height, weight and/or experience in wearing hearing devices, preferably at least the age of the hearing device user,
- information on the type of hearing device (BTE, ITE, ...),
- one or more physical coupling characteristics of the hearing device (type of earpiece, venting characteristics, receiver type, tubing, ...),
- measured feedback threshold mFB or feedback test related measurement data,
- real-ear measurement data, in particular using a probe tube, such as mREUG, mECLD, mREOG, mMLE,
- one or more audiograms, in particular being indicative of the hearing impairment of the hearing device user, for example audiograms measured in situ or by headphones, preferably audiogram differences of headphone and in situ measurements, in particular measured with the hearing device in place and/or imported from other sources,
- ear canal microphone measurement data,
- image and/or video data of the ear,
- impressions of the ear and/or the ear canal anatomy,
- tympanometry measurements,
- end-user data, such as usage time of hearing devices in specific programs (such as programs for speech and noise, calm surroundings, noisy surroundings, ...), volume/equalizer adaptions (for example in a hearing device app), sound cleaner adaptions (for example for the beamformer and denoiser),
- history of past fittings and/or measurement data for the respective hearing device user,
- data from speech understanding tests and/or spectrum-temporal modulation tests, and
- information on current hearing situation, such as:
   -- real-time measurements of leakage of the earpiece (e.g. via ear-canal microphone and/or via correlation-based measurements of the feedback path) and/or of environmental sound characteristics (e.g. background noise level, speech level and/or speech time and the like),
   -- currently activated program, and/or
   -- user input, in particular via a predefined interface or in form of NLP (in particular language model) processed free text or speech.

Particularly relevant output data are any steering parameters described above, in particular:
- amplification characteristics, such as gain matrices, preferably depending on frequency and/or audio signal to be processed and/or hearing situation,
- adaptions to the amplification characteristics, in particular program and/or hearing situation specifics,
- sound cleaner settings (e.g. strengths of beamformer, denoiser, wind noise canceller and/or feedback canceller), preferably program and/or hearing situation specific,
- frequency compression, preferably program and/or hearing situation specific,
- attack and release times of amplification, preferably program and/or hearing situation specific, and/or
- change of active program at runtime.

The audiological output data OD for adjusting audio signal processing at runtime may additionally or alternatively also comprise one or more real-ear coupling transfer functions.

The input data ID used for adjustment during runtime of the hearing device may be obtained directly during runtime, e.g. by real-time measurements, preferably using the hearing device and/or user inputs. Further input data ID may be based on stored measurements, such as hearing capability data of the hearing device user and/or measurement data, such as measured acoustic characteristics. It is also possible to use predicted and/or refined acoustic characteristics, which have been obtained using a neural network, e.g. during the initial fitting session.

## Claims

1. Neural network (24) for user-specifically adjusting audio signal processing on a hearing device (2), in particular for hearing device fitting, the neural network (24) comprising
- a set of at least two data inputs (26) for receiving respective input data (ID),
- an encoder (27) for calculating a unified embedding (28) of the input data (ID) in a unified embedding space, and
- at least one decoder (29) for obtaining audiological output data (OD) from the unified embedding (28),
wherein the encoder (27) is configured to calculate the unified embedding (28) based on input data (ID) received by different subsets of the set of data inputs (26).

2. Neural network (29) according to claim 1, wherein the input data (ID) of the set of data inputs (26) comprise one or more of the following data:
- demographic information on the hearing device user (U), in particular the age of the hearing device user (U),
- properties of the hearing device (2), being the type of the hearing device and/or physical coupling characteristics of the hearing device,
- one or more acoustic coupling transfer functions, including in particular ear-to-coupler level difference (ECLD), real-ear occluded gain (REOG), and/or microphone location effect (MLE),
- hearing impairment characteristics, in particular one or more audiograms (AGHD, AGHP),
- feedback threshold measurement data (FB), and
- information on current hearing situation (ICHS).

3. Neural network (24) according to any one of the preceding claims, wherein the audiological output data (OD) comprises one or more of the following:
- one or more predicted acoustic coupling transfer functions, in particular ear-to-coupler level difference (pECLD), and
- amplification characteristics, which in particular depend on frequency and/or audio input.

4. Neural network (24) according to any one of the preceding claims, wherein the at least two data inputs (26) are configured for receiving availability information (32) on whether the respective input data (ID) is available and/or is to be considered in the calculation of the unified embedding (28).

5. Neural network (24) according to any one of the preceding claims, wherein the encoder (27) comprises
- a data encoder block (36) per data input (26) for obtaining a data embedding (37) for the respective input data (ID) in a respective data embedding space, and
- a merging block (39) for calculating the unified embedding from the data embeddings (37).

6. Neural network (24) according to any one of the preceding claims, wherein the encoder (27), in particular a merging block (39) thereof, is configured to determine a trust score (33) for the input data (ID) of at least one data input (26).

7. Fitting system (23) for user-specifically adjusting audio signal processing on a hearing device (2), in particular for hearing device fitting, wherein the fitting system (23) comprises or has access to a neural network (24) as claimed in any one of the preceding claims.

8. Fitting system (23) according to claim 7, wherein
the fitting system (23) is configured to determine steering parameters (P) for user-specifically adjusting audio signal processing on the hearing device (2) based on one or more audiological output data (OD) obtained via the neural network (24).

9. Fitting system (23) according to claim 8, wherein determining the fitting parameters (P) comprises weighting at least one of the obtained audiological output data (OD) in dependence of one or more trust scores (33) determined by the neural network (24).

10. Fitting system (23) according to any one of claims 7 to 9, wherein the input data (ID) of the neural network (24) comprises a measured acoustic characteristic, the audiologic output data comprises a corresponding predicted acoustic characteristic, and the fitting system (23) is configured to determine a proposed acoustic characteristic, wherein the proposed acoustic characteristic is determined from the measured acoustic characteristic and the predicted acoustic characteristic in dependence of a respective trust score (33).

11. Method for user-specifically adjusting the audio signal processing on a hearing device (2), in particular for hearing device fitting, using the neural network according to any one of claims 1 to 6,
the method comprising the steps:
- providing a hearing device (2), the audio signal processing of which is to be user-specifically adjusted,
- providing input data samples, which relate to the provided hearing device (2), the hearing device user (U) and/or the instant hearing situation of the hearing device user (U), to respective one or more data inputs (26) of the neural network (24),
- obtaining audiological output data (OD) using the neural network (24), and
- adjusting the audio signal processing of the hearing device (2) based on the obtained audiological output data (OD).

12. Method according to claim 11, wherein the audiological output data (OD) comprises at least one predicted acoustic characteristic, in particular at least one predicted acoustic coupling transfer function, preferably a prediction of the ear-to-coupler level difference (pECLD), which is used to determine steering parameters (P) to be implemented on the hearing device (2).

13. Method according to claim 12, wherein determining the steering parameters (P) comprises weighting at least one of the obtained audiological output data in dependence of one or more trust scores (33) determined by the neural network (24).

14. Method according to any one of claims 11 to 13, wherein the input data (ID) of the neural network (24) comprises a measured acoustic characteristic and the audiologic output data (OD) comprises a corresponding predicted acoustic characteristic, wherein a proposed acoustic characteristic is determined from the measured acoustic characteristic and the predicted acoustic characteristic in dependence of a respective trust score (33) determined by the neural network (24) for the measured acoustic characteristic, and wherein the adjustment of the audio signal processing is determined using the proposed acoustic characteristic.

15. Method according to any one of claims 11 to 14, wherein the audiological output data (OD) comprises steering parameters (P), which are implemented on the hearing device (2).

16. Method according to claim 15, wherein the input data comprises feedback information and/or information on the current hearing situation of the hearing device user (U) measured during runtime of the hearing device (2) and adjustment is performed in parallel to audio signal processing.
